# EUROPÄISCHE PATENTSCHRIFT

(11) **EP 2 192 310 B1**
(45) Veröffentlichungstag und Bekanntmachung des Hinweises auf die Patenterteilung: **09.05.2018**
(21) Anmeldenummer: 09014350.4
(22) Anmeldetag: 17.11.2009
(51) Int. Cl.: F16B 45/02

(54) **Karabinerhaken**
Carabineer hook
Crochet de mousqueton

(30) Priorität: 27.11.2008 AT 18502008
(43) Veröffentlichungstag der Anmeldung: 02.06.2010
(73) Patentinhaber: ABA Hörtnagl GmbH, 6166 Fulpmes (AT)
(72) Erfinder: Hörtnagl, Andreas, 6166 Fulpmes (AT)
(74) Vertreter: Hofmann, Ralf U.

(56) Entgegenhaltungen:
- EP-A1- 1 070 862
- WO-A1-2005/097544
- US-A- 4 440 432

## Beschreibung

Die vorliegende Erfindung betrifft einen Karabinerhaken, wie er im Oberbegriff des Patentanspruchs 1 beschrieben ist.

Karabinerhaken werden z.B. bei verschiedenen Sportarten wie Klettern, Eisklettern, Bergsteigen, Paragleiten, Drachenfliegen und dergleichen in verschiedensten Ausführungsformen und zu verschiedensten Zwecken eingesetzt. Auch bei der Sicherung von arbeitenden Personen gegen Absturz werden sie verwendet. In der Regel wird der Bügel des Karabinerhakens in ein Seil, eine Öse oder dergleichen eingehängt. Hierzu wird das Seil oder die Öse durch die Einführöffnung in das Innere des Bügels eingeführt. Die Einführöffnung wird durch Aufschwenken des Verschlussteils geöffnet. Ist das Seil oder die Öse im Inneren des Bügels, so kann die Einführöffnung durch Zurückschwenken des Verschlussteils wieder geschlossen werden. Beim Stand der Technik sind nun verschiedene Sicherungsmaßnahmen bekannt, die verhindern sollen, dass das Verschlussteil beim Einsatz des Karabinerhakens versehentlich in die geöffnete Stellung geschwenkt wird.

Eine Art einer Sicherung des Verschlussteils ist aus den ersten beiden Ausführungsbeispielen der WO 95/19505 bekannt. Bei dieser Schrift ist im Inneren des verschwenkbaren Verschlussteils ein um eine Sperrelementschwenkachse verschwenkbares Sperrelement gelagert. Dieses weist eine Handhabe und einen Stützsteg auf. In der Sperrstellung befindet sich das Sperrelement in einer solchen Stellung, dass der Stützsteg an einer Stützfläche des Bügels anliegt. In dieser Sperrstellung ist ein versehentliches Aufschwenken des Verschlussteils verhindert, das Verschlussteil ist somit gegen ein Verschwenken in Richtung hin zu dessen maximal geöffneter Stellung gesperrt. Durch Drücken auf die Handhabe schwenkt das Sperrelement. Der innere Stützsteg gerät außer Eingriff mit der Stützfläche des Bügels und das Verschlussteil kann um seine Verschlussteilschwenkachse in Richtung seiner maximal geöffneten Stellung verschwenkt werden. Beim Loslassen des Verschlussteils und des Sperrelementes erfolgt ein Zurückschwenken in die Ausgangsstellung mittels einer Rückstellfeder.

Der Nachteil des genannten Standes der Technik liegt vor allem darin, dass bei einem Betätigen der Handhabe des Sperrelementes diese in Richtung hin zu einer am Bügel angeordneten Stützfläche geschwenkt wird. Dies hat wiederum zur Folge, dass nur sehr begrenzte bzw. kleine Öffnungswinkel des Verschlussteils realisierbar sind. Darüber hinaus wirkt bei Betätigen der Handhabe nur ein vergleichsweise kurzer Hebelarm, sodass nur ein relativ geringes Drehmoment in Aufschwenkrichtung auf das Verschlussteil ausgeübt wird. Zum Aufschwenken ist beim Stand der Technik oft eine weitere Betätigung direkt am Verschlussteil notwendig. In der Praxis muss also meist mit einem Finger das Sperrelement und mit einem weiteren Finger das Verschlussteil betätigt werden um letzteres in Richtung der maximal geöffneten Stellung zu verschwenken. Dies ist aufwendig und mühsam und kann, insbesondere wenn nur eine Hand zur Betätigung des Karabinerhakens frei ist, auch gefährlich sein.

Aus der US 4,440,432 A ist ein gattungsgemäßer Karabinerhaken bekannt.

Aufgabe der Erfindung ist es, einen anderen Karabinerhaken der oben genannten Art zu schaffen.

Dies wird erfindungsgemäß mit einem Karabinerhaken gemäß Patentanspruch 1 erreicht.

Es ist somit vorgesehen, dass das Sperrelement zum Freigeben des Verschlussteils in der selben Drehrichtung verschwenkt wird, wie das Verschlussteil beim Verschwenken aus der Schließstellung in Richtung hin zu dessen maximal geöffneter Stellung um die Verschlussteilschwenkachse schwenkt. Es ist somit vorgesehen, dass das Sperrelement aus der Sperrstellung in Richtung hin zur Freigabestellung und das Verschlussteil aus der Schließstellung in Richtung hin zu dessen maximal geöffneter Stellung beide entweder im Uhrzeigersinn oder beide entsprechend gegen den Uhrzeigersinn zu verschwenken sind. Hierdurch wird vermieden, dass es durch Verschwenken des Sperrelementes zu einer Begrenzung des maximal möglichen Öffnungswinkels des Verschlussteils durch die Handhabe des Sperrelementes kommt. Weiters wird beim Schwenken des Sperrelementes der genannten Art ein größeres Drehmoment auf das Verschlussteil ausgeübt. Dadurch ist es möglich, das Sperrelement und den Verschlussteil gleichzeitig durch eine einzige Bewegung eines einzigen Fingers ohne großen Kraftaufwand zu betätigen. Dies ermöglicht auch eine sichere und einfache Einhand-Bedienung.

Besonders bevorzugt ist vorgesehen, dass das Sperrelement eine Handhabe zum Betätigen des Sperrelements aufweist und die Handhabe zum Verschwenken des Sperrelementes aus der Sperrstellung in Richtung hin zur Freigabestellung in einer Richtung weg von der Verschlussteilschwenkachse zu schieben oder zu schwenken ist.

Um ein ungewolltes Verschwenken des Sperrelementes aus der Sperrstellung von vornherein auszuschließen, ist günstigerweise vorgesehen, dass das Verschlussteil eine Ausnehmung aufweist und die Handhabe, vorzugsweise das gesamte Sperrelement, innerhalb der Ausnahme angeordnet ist. Günstigerweise befinden sich die Handhabe und/oder das gesamte Sperrelement vollständig innerhalb der Ausnehmung, was bedeutet, dass weder die Handhabe bzw. andere Teile des Sperrelementes über die äußeren Konturen bzw. die Ausnehmung des Verschlussteils hervorstehen. Bevorzugt gilt dies in allen Stellungen des Sperrelementes. Bevorzugte Ausgestaltungsformen von erfindungsgemäßen Karabinerhaken sehen vor, dass das Sperrelement eine Kontaktfläche aufweist mit der es an einer Stützfläche des Bügels anliegt. Diese Stützfläche ist günstigerweise in einem Endbereich des Bügels angeordnet, in dem vorzugsweise auch die Verschlussteilschwenkachse des Verschlussteils angeordnet ist.

Besonders günstige Ausgestaltungsformen sehen vor, dass das Sperrelement beim Verschwenken um die Sperrelementschwenkachse von der Sperrstellung in Richtung hin zur Freigabestellung und/oder in die entgegengesetzte Richtung mit seiner Kontaktfläche, vorzugsweise schlupffrei, an der Stützfläche des Bügels abrollt. Dieses Abrollen kann auch nur bei einem Teil der Schwenkbewegung vorgesehen sein, vorzugsweise beim Verschwenken um die Sperrelementschwenkachse von der Sperrstellung in Richtung hin zur Freigabestellung beim ersten Teil der Verschwenkbewegung. In diesen Ausgestaltungsformen wird durch das, insbesondere schlupffreie, Abrollen das Sperrelement nicht nur geschwenkt, sondern auch entlang der Stützfläche des Bügels relativ zu dieser bewegt. In diesen Ausgestaltungsformen ist somit nicht vorgesehen, dass das Sperrelement beim Verschwenken an der Stützfläche vorbeirutscht oder -gleitet, sondern zwingend eine Relativbewegung zwischen Stützfläche und Sperrelement beim Verschwenken des Sperrelementes erreicht wird.

In besonders bevorzugten Ausgestaltungsformen kann dies dazu verwendet werden, dass durch dieses Abrollen der Kontaktfläche an der Stützfläche beim Verschwenken des Sperrelementes von der Sperrstellung in Richtung hin zur Freigabestellung das Verschlussteil zwangsweise aus Richtung seiner Schließstellung in Richtung hin zu seiner maximal geöffneten Stellung mitgeschwenkt wird. Dies hat im Ergebnis zur Folge, dass beim Verschwenken des Sperrelementes aus seiner Sperrstellung das Verschlussteil automatisch in Richtung hin zu seiner maximal geöffneten Stellung geschwenkt wird. Es reicht somit ein Betätigen des Sperrelements aus, um automatisch auch das Verschlussteil zu verschwenken. Dies ist natürlich auch in die umgekehrte Richtung möglich, indem bei Verschwenken des Sperrelementes von der Freigabestellung in Richtung hin zur Sperrstellung das Verschlussteil zwangsweise aus Richtung seiner maximal geöffneten Stellung in Richtung hin zu seiner Schließstellung mitschwenkt. In diesen Ausgestaltungsformen führt eine Betätigung des Sperrelementes somit automatisch zu einem Verschwenken des Verschlussteils. Andersherum ist dies jedoch nicht vorgesehen, solange das Sperrelement sich in einer Sperrstellung befindet, da das Sperrelement sonst nicht seine Sicherungsfunktion wahrnehmen würde. Das Sperrelement muss auch nicht nur in einer einzigen Sperrstellung ein Verschwenken des Verschlussteils verhindern. Es kann vielmehr auch vorgesehen sein, dass das Sperrelement ausgehend von einer ersten Sperrstellung in verschiedenen Sperrstellungen in einem ersten Winkelbereich eines Schwenkwinkels um die Sperrelementschwenkachse diesseits eines Grenzwinkels das Verschlussteil in dessen Schließstellung gegen ein Verschwenken des Verschlussteils in Richtung hin zu dessen maximal geöffneter Stellung sperrt. Verlässt das Sperrelement den ersten Winkelbereich, so kann vorgesehen sein, dass das Sperrelement in einem zweiten Winkelbereich jenseits des Grenzwinkels bei einem Verschwenken des Verschlussteils in Richtung hin zu seiner maximal geöffneten Stellung in Richtung hin zu einer maximalen Freigabestellung des Sperrelements auch zwangsweise mitgeschwenkt wird. In diesem zweiten Winkelbereich jenseits des Grenzwinkels muss dann zum Weiterverschwenken des Verschlussteils nicht zwingend das Sperrelement betätigt werden. Es kann auch direkt das Verschlussteil betätigt werden, wobei dann das Sperrelement in diesem zweiten Winkelbereich durch Verschwenken des Verschlussteils mitbetätigt wird, indem es automatisch bzw. zwangsweise mitgeschwenkt wird. In bevorzugten Ausgestaltungsformen besitzt das Sperrelement somit nicht nur im ersten Winkelbereich diesseits des Grenzwinkels mehrere Sperrstellungen. Es ist vielmehr in diesen Ausgestaltungsformen auch vorgesehen, dass das Sperrelement im zweiten Winkelbereich jenseits des Grenzwinkels mehrere Freigabestellungen einnehmen kann. Bei bevorzugten Varianten liegt der Grenzwinkel bei Winkeln kleiner oder gleich 10°, gemessen zwischen einer ersten Verbindungsgeraden zwischen der Sperrelementsschwenkachse und dem Punkt der Kontaktfläche des Sperrelements mit dem größten Abstand von der Sperrelementschwenkachse und einer zweiten Verbindungsgeraden zwischen der Sperrelementschwenkachse und der Verschlussteilschwenkachse. Die Bezeichnung diesseits des Grenzwinkels umfasst alle Schwenkwinkel des Sperrelementes, die zwischen der ersten Sperrstellung des Sperrelementes und dem Grenzwinkel liegen. Die Bezeichnung jenseits des Grenzwinkels umfasst alle Schwenkwinkel, die auf der dazu entgegengesetzten Seite des Grenzwinkels liegen. Die erste und die zweite Verbindungsgerade verlaufen jeweils durch die Mittelpunkte der jeweiligen Schwenkachse(n). Der Grenzwinkel liegt in der Regel auf der Seite der zweiten Verbindungsgeraden, welche in Richtung hin zur ersten Sperrstellung weist.

Weitere Merkmale und Einzelheiten eines bevorzugten Ausführungsbeispiels der Erfindung werden anhand der Figurenbeschreibung erläutert. Es zeigen:
- Fig. 1 bis 4: verschiedene Darstellungen des erfindungsgemäßen Ausführungsbeispiels, wobei sich das Verschlussteil in der Schließstellung und das Sperrelement in der ersten Sperrstellung befindet;
- Fig. 5 u. 6: das selbe Ausführungsbeispiel, wobei das Sperrelement bis zum Grenzwinkel geschwenkt ist;
- Fig. 7 u. 8: wiederum das selbe Ausführungsbeispiel in einer Stellung, bei der das Verschlussteil bereits um einen gewissen Winkel in Richtung hin zur maximal geöffneten Stellung geschwenkt ist;
- Fig. 9 u. 10: das selbe Ausführungsbeispiel, wobei sich das Verschlussteil in der maximal geöffneten Stellung gemäß den Fig. 1 bis 4 befindet;
- Fig. 11: eine perspektivische Darstellung der Stellung des Verschlussteils wie in den Fig. 1 bis 4;
- Fig. 12: eine perspektivische Ansicht in der Stellung gemäß den Fig. 7 u. 8;
- Fig. 13: eine perspektivische Ansicht des Karabinerhakens in der Stellung gemäß den Fig. 9 und 10 und
- Fig. 14 und 15: Darstellungen des Sperrelements.

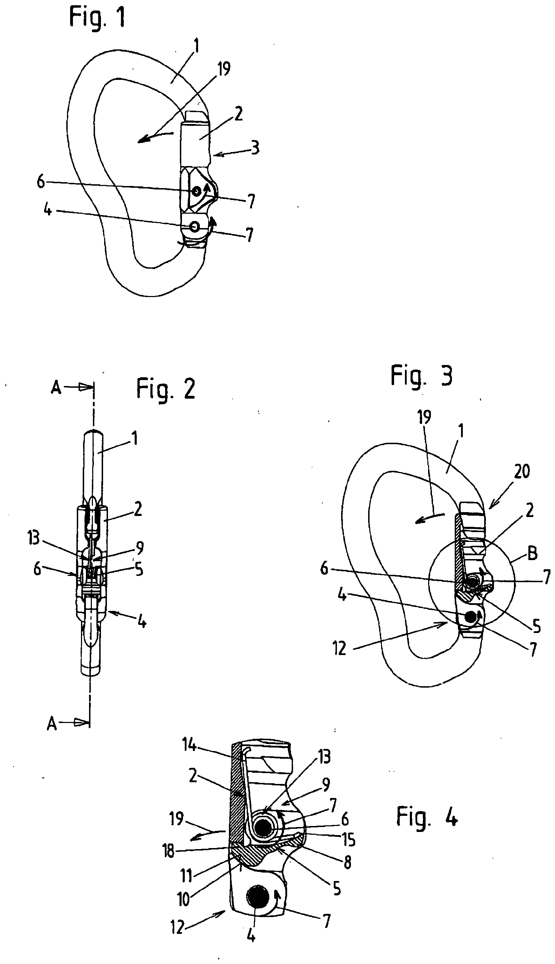

Fig. 1 zeigt eine Seitenansicht auf den erfindungsgemäßen Karabinerhaken. Das Verschlussteil 2 ist mittels der Verschlussteilschwenkachse 4 am Bügel 1 verschwenkbar angeordnet, in den Fig. 1 bis 4 befindet sich das Verschlussteil 2 in seiner Schließstellung, in der der Bügel 1 und das Verschlussteil 2 ein in sich geschlossenes Gebilde sind. Hierdurch wird die Einführöffnung 3 durch die ein Seil oder eine Öse oder dergleichen in das Innere des Bügels eingeführt werden kann, vollständig verschlossen. In dieser Seitenansicht ist bereits die Sperrelementschwenkachse 6, um die das Sperrelement 5 verschwenkt werden kann, zu sehen. Das Sperrelement 5 selbst ist nicht zu sehen, da es vollständig innerhalb einer Ausnehmung 9 im Verschlussteil 2 angeordnet und damit in der Ansicht gemäß Fig. 1 hinter den die Ausnehmung begrenzenden Seitenwänden des Verschlussteils 2 verborgen ist. In dieser Perspektive ist somit besonders gut zu sehen, dass weder die Handhabe 8, noch andere Teile des Sperrelementes 5 aus der Ausnehmung 9 herausragen.

Fig. 2 zeigt nun eine Ansicht von vorne auf den Karabinerhaken. In dieser Ansicht ist die Ausnehmung 9 im Verschlussteil 2 zu sehen. In ihr ist das Sperrelement 5 angeordnet und auch die Rückstellfeder 13. Fig. 2 zeigt auch die Schnittlinie AA entlang der das Verschlussteil 2 und das Sperrelement 5 in den Darstellungen der Fig. 3 bis 10 geschnitten ist. Fig. 4 zeigt den Bereich B aus Fig. 3 vergrößert. Besonders gut zu sehen ist hier das geschnitten dargestellte Sperrelement 5, welches schwenkbar um die Sperrelementschwenkachse 6 in der Ausnehmung 9 gelagert ist. Es weist die Handhabe 8 auf, die z.B. mit dem Daumen oder einem anderen Finger beaufschlagt werden kann. Weiters ist auch die Rückstellfeder 13 zu sehen, welche im gezeigten Ausführungsbeispiel sowohl zum Zurückschwenken des Verschlussteils 2 in seine Schließstellung, als auch des Sperrelementes 5 in seine Sperrstellung vorgesehen ist. Es handelt sich somit um eine einzige gemeinsame Rückstellfeder 13. Die Rückstellfeder 13 weist im gezeigten Ausführungsbeispiel einen ersten Schenkel 14 und zumindest einen zweiten Schenkel 15 auf. Der erste Schenkel 14 liegt am Verschlussteil 2 an, der zweite Schenkel 15 am Sperrelement 5. Im Bereich zwischen den Schenkeln 14 und 15 ist die Rückstellfeder 13 an der
Sperrelementschwenkachse 6 gelagert. Im gezeigten Ausführungsbeispiel ist sie in diesem Bereich um die Sperrelementschwenkachse 6 herumgewickelt. Die Sperrelementschwenkachse 6 ist fix am Verschlussteil 2 befestigt. Die Verschlussteilschwenkachse 4 ist im gezeigten Ausführungsbeispiel fix am Bügel 1 befestigt, und zwar bei der dargestellten Variante in dem selben Endbereich 12 des Bügels 1, in dem dieser auch die Stützfläche 11 aufweist. An dieser Stützfläche 11 des Bügels 1 liegt das Sperrelement 5 mit seiner Kontaktfläche 10 an. Im gezeigten Ausführungsbeispiel weist das Sperrelement 5 in einem Querschnitt einen zapfenartigen Fortsatz 18 auf, dessen äußere Oberflächen die Kontaktfläche 10 aufweisen bzw. zumindest zum Teil bilden. Im gezeigten Ausführungsbeispiel reicht die Kontaktfläche 10 von einer Seite dieses Zapfens 18, bis auf die entgegengesetzte Seite des Zapfens 18.

In den Fig. 1 bis 4 befindet sich das Sperrelement 5 in seiner ersten Sperrstellung. Es liegt mit einem Teil seiner Kontaktfläche 10 an einem oberen Endbereich der Stützfläche 11 an und zwar in der Art, dass bei dem Versuch, das Verschlussteil 2 in Richtung 19 seiner maximal geöffneten Stellung zu schwenken, das Sperrelement 5 diese Schwenkbewegung verhindert und das Verschlussteil 2 somit in seiner Schließstellung sperrt. Die Sperrwirkung resultiert dadurch, dass bei dem Versuch, das Verschlussteil 2 in Richtung 19 zu schwenken, auch die fix am Verschlussteil 2 angeordnete Sperrelementschwenkachse 6 mit in Richtung 19 verschwenkt werden müsste, was durch das Anliegen der Kontaktfläche 10 des Sperrelementes 5 an der Stützfläche 11 des Bügels 1 aber verhindert wird. Solange sich das Sperrelement 5 in einer Sperrstellung befindet, kann somit das Verschlussteil 2 nicht seine Schließstellung verlassen. Wie insbesondere in den Fig. 3 bis 10 zu sehen, bewirkt die Rückstellfeder 13 in allen Stellungen eine Kraft auf das Sperrelement 5, welche die Kontaktfläche 10 des Sperrelementes 5 in Richtung bzw. gegen die Stützfläche 11 des Bügels 1 bzw. an die Stützfläche 11 des Bügels 1 drückt. Die Stützfläche 11 ist günstigerweise wie hier realisiert, eine stetig gekrümmte Oberfläche. Dies bedeutet, dass sie keine Kanten hat, was natürlich nicht ausschließt, dass sie, wie auch im gezeigten Ausführungsbeispiel dargestellt, einen über ihre Erstreckung sich ändernden Krümmungsradius aufweisen kann. Die Stützfläche 11 bildet eine äußere Oberfläche eines keilförmigen Fortsatzes des Bügels 1, welcher mit seiner Keilspitze in Richtung hin zum gegenüberliegenden Endbereich 20 des Bügels 1 weist. Die Stützfläche 11 ist im Bereich zwischen der Sperrelementschwenkachse 6 und der Verschlussteilschwenkachse 4 angeordnet.

Damit das Verschlussteil 2 die in den Fig. 1 bis 4 gezeigte Schließstellung verlassen kann, muss zunächst einmal das Sperrelement 5 durch Betätigen der Handhabe 8 in eine Freigabestellung gebracht werden. Dies erfolgt, indem das Sperrelement 5 in Drehrichtung 7 um seine Sperrelementschwenkachse 6 geschwenkt wird. Die genannte Drehrichtung 7 entspricht erfindungsgemäß der Drehrichtung 7 in der das Verschlussteil 2 um seine Verschlussteilschwenkachse 4 geschwenkt werden muss, um von der Schließstellung in Richtung hin zu seiner maximal geöffneten Stellung verschwenkt zu werden.

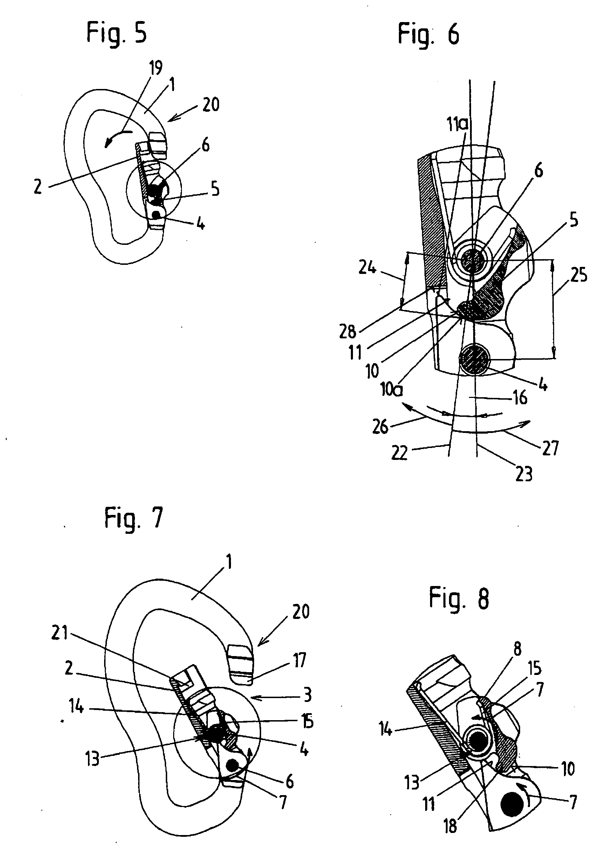

Die Fig. 5 und 6 zeigen nun zu Fig. 3 und 4 analoge Schnittdarstellungen, wobei sich das Sperrelement 5 allerdings nicht mehr in der ersten Sperrstellung, sondern in der dem Grenzwinkel 16 entsprechenden Sperrstellung befindet. Zwischen den in Fig. 3 u. 4 und den in Fig. 5 u. 6 gezeigten Stellungen befindet sich der erste Winkelbereich des Schwenkwinkels des Sperrelementes 5, in dem das Sperrelement 5 jeweils noch in einer Sperrstellung angeordnet ist. Dies bedeutet, dass in allen diesen Stellungen des Sperrelementes 5 das Verschlussteil 2 immer noch an einem Verschwenken in Richtung 19 gehindert wird. Das Verschlussteil 2 kann sich in allen diesen Stellungen des Sperrelementes 5 immer noch in seiner Schließstellung gemäß Fig. 1 befinden. Es ist aber, wie in den Fig. 5 und 6 zu sehen, auch möglich, dass das Verschlussteil 2 im Bereich des Grenzwinkels 16 schon leicht in Richtung 19 verschwenkt ist, wobei aber günstigerweise das Verschlussteil 2 im Endbereich 20 immer noch mit dem Bügel überlappt. In diesem ersten Winkelbereich bzw. in den Sperrstellungen resultiert eine Kraft, die versucht, das Verschlussteil 2 in Richtung 19 also in Richtung seiner maximal geöffneten Stellung zu verschwenken, durch Anpressen der Kontaktfläche 10 an die Stützfläche 11 entweder ein Drehmoment auf das Sperrelement, welches in Richtung dessen erster Sperrstellung wirkt oder es wird ein Drehmoment auf das Sperrelement 5 in die dazu entgegengesetzte Richtung, also in Richtung der Freigabestellung erzeugt, welches aber geringer als die durch das Anpressen der Kontaktfläche 10 an die Stützfläche 11 erzeugte Haftreibung ist. Hierdurch wird die gewünschte Sperrwirkung des Sperrelementes 5 erzeugt.

Fig. 6 zeigt vergrößert den in Fig. 5 mit einem Kreis umfassten Bereich um hieran die Lage des Grenzwinkels 16 zu erläutern. Der Punkt (bzw. die Linie bzw. der Teilbereich) der Kontaktfläche 10 mit dem größten Abstand 24 von der Sperrelementschwenkachse 6 bzw. deren Mittelpunkt ist mit dem Bezugszeichen 10a gekennzeichnet. Durch diesen Punkt 10a und die Sperrelementschwenkachse 6 bzw. deren Mittelpunkt verläuft die erste Verbindungsgerade 22. Die zweite Verbindungsgerade 23 verläuft zwischen der Sperrelementschwenkachse 6 bzw. deren Mittelpunkt und der Verschlusselementsperrachse 4 bzw. deren Mittelpunkt. Der Abstand zwischen dem Mittelpunkt der Sperrelementschwenkachse 6 und der Verschlusselementschwenkachse 4 ist mit dem Bezugszeichen 25 gekennzeichnet.

Der Grenzwinkel 16 wird zwischen der ersten Verbindungsgeraden 22 und der zweiten Verbindungsgeraden 23 gemessen. Er beträgt im gezeigten Ausführungsbeispiel ca. 8° und allgemein günstigerweise zwischen 0° und 10° (einschließlich). Der erste Winkelbereich diesseits des Grenzwinkels 16 liegt zwischen der ersten Sperrstellung und der ersten Verbindungsgeraden 22 und ist durch den Pfeil 26 gekennzeichnet. In diesem ersten Winkelbereich 26 befindet sich das Sperrelement 5 jeweils in einer Sperrstellung. Der zweite Winkelbereich jenseits des Grenzwinkels 16 befindet sich auf der gegenüberliegenden Seite der ersten Verbindungsgeraden 22 und ist durch den Pfeil 27 gekennzeichnet. In diesem zweiten Winkelbereich befindet sich das Sperrelement 5 in einer seiner Freigabestellungen. Der Grenzwinkel 16 liegt in der Regel auf der Seite der zweiten Verbindungsgeraden 23, welche in Richtung 26 hin zur ersten Sperrstellung weist.

Ohne Berücksichtigung eines Spiels zwischen den Achsbolzen der Sperrelementschwenkachse 6 und der Verschlussteilschwenkachse 4 und den Achsbohrungen, in denen die Achsbolzen gelagert sind, wäre der Grenzwinkel gleich 0°, womit der Grenzwinkel 16 dann erreicht wäre, wenn der Punkt 10a auf der zweiten Verbindungsgeraden 23 zu liegen käme. In der Praxis ist aber aus Toleranzgründen ein gewisses Spiel zuzulassen. Dies sollte jedoch so gewählt werden, dass der Grenzwinkel nicht 10° überschreitet. Ist kein Spiel vorhanden, so besteht die Gefahr, dass sich dass Sperrelement 5 mit seiner Kontaktfläche 10 aufgrund der Keilwirkung gegen die Stützfläche 11 verklemmt, was in der Regel nur mit erheblichem Kraftaufwand zu lösen ist.

Zumindest bei einem Teil, vorzugsweise dem ersten Teil, der Verschwenkbewegung des Sperrelementes 5 aus der ersten Sperrstellung gemäß Fig. 1 bis 4 hin zum Grenzwinkel 16 gemäß Fig. 5 u 6 und weiter in Richtung Freigabestellung gemäß der Fig. 7 bis 10, rollt das Sperrelement 5 mit seiner Kontaktfläche 10, vorzugsweise schlupffrei, an der Stützfläche 11 des Bügels 1 ab. Das Abrollen führt zunächst einmal zu einer Zwangskopplung der Schwenkbewegung des Sperrelementes 5 um die Sperrelementschwenkachse 6 mit einer Verschwenkbewegung des gesamten Sperrelementes 5 um die Verschlussteilschwenkachse 4. Durch die fixe Befestigung der Sperrelementschwenkachse 6 am Verschlussteil 2 resultiert dies wiederum in einer Zwangskopplung des Verschlussteils 2 mit der Drehbewegung des Sperrelementes 5 und damit in einem Verschwenken des Verschlussteils 2 um die Verschlussteilschwenkachse 4. Zumindest im zweiten Winkelbereich oberhalb des Grenzwinkels 16 führt dieses Abrollen der Kontaktfläche 10 an der Stützfläche 11 beim Verschwenken des Sperrelementes 5 aus Richtung der Sperrstellung in Richtung hin zur maximal möglichen Freigabestellung dazu, dass das Verschlussteil 2 zwangsweise aus Richtung seiner Schließstellung in Richtung hin zu seiner maximal geöffneten Stellung mitgeschwenkt wird. Das Verschlussteil 2 muss also nicht durch gesonderte Kraftaufwendung in Richtung 19 geschwenkt werden. Dies geschieht automatisch durch Verschwenken des Sperrelementes 5 um seine Sperrelementschwenkachse 6 in Drehrichtung 7.

Die Fig. 7 u. 8 zeigen eine Zwischenstellung in der sich das Sperrelement 5 in einem Schwenkwinkel im zweiten Winkelbereich oberhalb des Grenzwinkels 16 befindet. Das Verschlussteil 2 befindet sich in einer teilweise geöffneten Stellung, sodass die Einführöffnung 3 bereits teilweise freigegeben ist. Die Rückstellfeder 13 befindet sich in einem gegenüber den Fig. 3 bis 6 weiter komprimierten Zustand. Sie wirkt in allen Stellungen den Verschwenkbewegungen in Drehrichtung 7 entgegen. In Fig. 7 ist der obere Endbereich 20 des Bügels 1 frei zu sehen. Er trägt, wie an sich bekannt, eine Auswölbung 17, welche von einer entsprechenden Schulter 21 des Verschlussteils 2 hintergriffen werden kann. Dies dient, wie an sich bekannt, dazu, bei sich in Schließstellung befindendem Verschlussteil 2 die Zugfestigkeit des Karabinerhakens zu erhöhen.

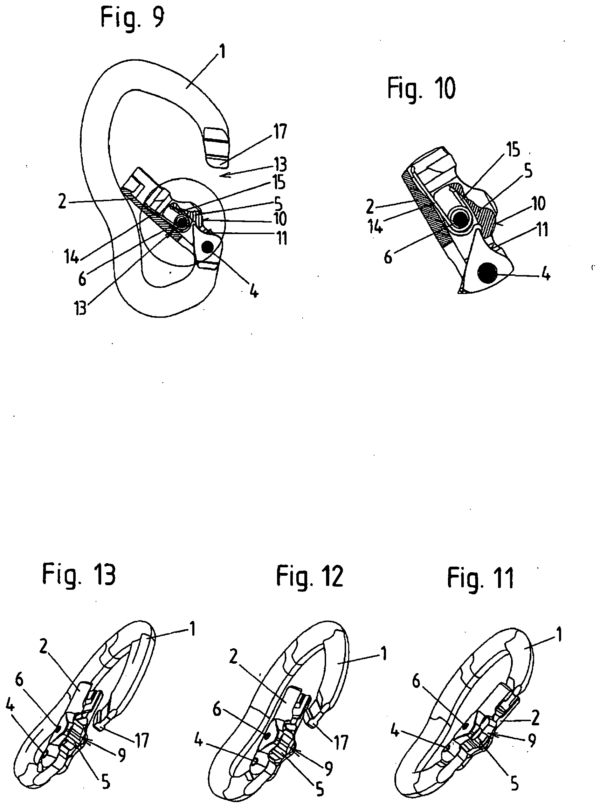

Jenseits des Grenzwinkels 16 steht es dem Benutzer im zweiten Winkelbereich des Karabinerhakens frei, zum Weiterverschwenken des Verschlussteils 2 und des Sperrelementes 5 an der Handhabe 8 oder direkt am Verschlussteil 2 anzugreifen. In diesem zweiten Winkelbereich ist beides möglich, um das Verschlussteil 2 in die in den Fig. 9 u. 10 dargestellte maximale Öffnungsstellung zu bringen. Wird die Handhabe 8 in Drehrichtung 7 betätigt, so erfolgt automatisch über das Abrollen des Sperrelementes 5 an der Stützfläche 11 ein entsprechendes Weiteröffnen des Verschlussteils 2. Wird hingegen direkt das Verschlussteil 2 betätigt, so wird in diesem zweiten Winkelbereich das Sperrelement 5 automatisch weiter in Drehrichtung 7 um seine Sperrelementschwenkachse 6 mitgeschwenkt. Letzteres gilt aber wie bereits ausgeführt, nur für den zweiten Winkelbereich oberhalb des Grenzwinkels 16.

Zur Rückstellung des Verschlussteils 2 in seine Schließstellung und des Sperrelementes 5 in seine erste Sperrstellung gemäß der Fig. 1 bis 4, können das Verschlussteil 2 und das Sperrelement 5 einfach losgelassen werden. Die Rückstellfeder 13 sorgt durch Drehen des Sperrelementes 5 entgegen der Richtung 7 um seine Sperrelementschwenkachse 6 automatisch für eine Rückstellung, wobei auch bei dieser Rückstellung die Kontaktfläche 10 an der Stützfläche 11 zumindest bereichsweise, vorzugsweise schlupffrei, abrollt.

Die Fig. 11 bis 13 zeigen noch perspektivische Ansichten auf den Karabinerhaken dieses erfindungsgemäßen Ausführungsbeispiels. Fig. 11 zeigt die Stellung gemäß der Fig. 1 bis 4, Fig. 12 die Stellung gemäß der Fig. 7 u. 8 und Fig. 13 die Stellung gemäß Fig. 9 u. 10. Besonders gut zu sehen ist in diesen Darstellungen, dass die Ausnehmung 9 im Verschlussteil 2 eine solche Breite aufweist, dass die nicht über die Ausnehmung 9 hervorstehende Handhabe 8 mit einem Finger betätigt werden kann.

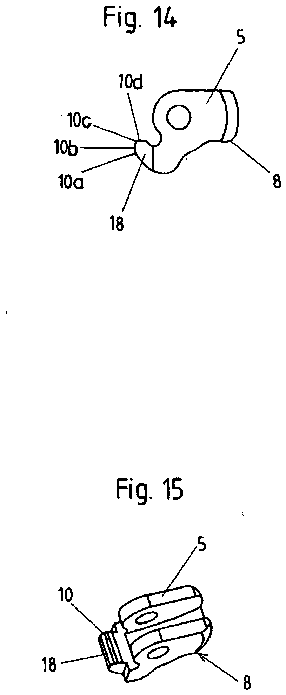

Die Fig. 14 zeigt eine Seitenansicht auf das Sperrelement 5, die Fig. 15 eine perspektivische Ansicht. In Fig. 14 sind verschiedene Punkte bzw. Bereiche 10a bis 10d der Kontaktfläche 10 des Sperrelementes 5 noch einmal gesondert beschriftet. In der Schließstellung des Verschlussteils 2 und damit in der ersten Sperrstellung des Sperrelementes 5 liegt das Sperrelement 5 mit dem Bereich 10d auf der in Fig. 6 gekennzeichneten Fläche 28 spielfrei an. Durch Betätigen des Sperrelements 5 rollen beim Öffnen die Flächen im Bereich des Punktes 10a und die Fläche 10b ausgehend von der ersten Sperrstellung auf der Stützfläche 11 des Bügels 1 ab. Bis zum Grenzwinkel 16 befindet sich das Sperrelement 5 dabei jeweils in einer Sperrstellung, in der das Verschlussteil 2 nicht durch direkt an ihm angreifende Krafteinwirkung weiter geöffnet werden kann. Ist der Grenzwinkel 16 überschritten, so kann das Verschlussteil 2 durch direkte Kraftbeaufschlagung weiter geöffnet werden. Nach 10a und 10b rollt ein Teil des Bereichs 10c auf der Fläche 11 des Bügels 1 ab und geht beim weiteren Öffnen in eine Gleitbewegung über. Bei nahezu vollständiger Öffnung des Verschlussteiles 2 gleitet noch der Bereich 10d über die Fläche 11 des Bügels. Bei einer besonders bevorzugten Variante mit besonders großem Öffnungswinkel in der maximal geöffneten Stellung des Verschlussteils 2 kann vorgesehen sein, dass der Bereich 10d über den in Fig. 6 gekennzeichneten Bereich 11a der Stützfläche 11 des Bügels 2 gleitet.

### Legende zu den Hinweisziffern:

- 1: Bügel
- 2: Verschlussteil
- 3: Einführöffnung
- 4: Verschlussteilschwenkachse
- 5: Sperrelement
- 6: Sperrelementschwenkachse
- 7: Drehrichtung
- 8: Handhabe
- 9: Ausnehmung
- 10: Kontaktfläche
- 10a: Punkt der Kontaktfläche
- 10b: Bereich der Kontaktfläche
- 10c: Bereich der Kontaktfläche
- 10d: Bereich der Kontaktfläche
- 11: Stützfläche
- 11a: Bereich der Stützfläche
- 12: Endbereich
- 13: Rückstellfeder
- 14: erster Schenkel
- 15: zweiter Schenkel
- 16: Grenzwinkel
- 17: Auswölbung
- 18: Zapfen
- 19: Richtung
- 20: Endbereich
- 21: Schulter
- 22: erste Verbindungsgerade
- 23: zweite Verbindungsgerade
- 24: Abstand
- 25: Abstand
- 26: erster Winkelbereich
- 27: zweiter Winkelbereich
- 28: Fläche

## Patentansprüche

1. Karabinerhaken mit zumindest einem Bügel (1) und zumindest einem Verschlussteil (2) und zumindest einer Einführöffnung (3) des Bügels (1), welche von dem Verschlussteil (2) in dessen Schließstellung verschließbar ist, wobei das Verschlussteil (2) mittels einer Verschlussteilschwenkachse (4) zwischen der Schließstellung und einer maximal geöffneten Stellung verschwenkbar am Bügel (1) gelagert ist und zumindest ein Sperrelement (5) mittels einer Sperrelementschwenkachse (6) verschwenkbar am oder im Verschlussteil (2) gelagert ist, wobei das Sperrelement (5) in zumindest einer Sperrstellung das Verschlussteil (2) in dessen Schließstellung gegen ein Verschwenken des Verschlussteils (2) in Richtung hin zu dessen maximal geöffneter Stellung sperrt und in zumindest einer Freigabestellung ein Verschwenken des Verschlussteils (2) in Richtung hin zu dessen maximal geöffneter Stellung erlaubt, wobei das Sperrelement (5) zum Verschwenken aus der Sperrstellung in Richtung hin zur Freigabestellung in derselben Drehrichtung (7) um die Sperrelementschwenkachse (6) zu schwenken ist, wie das Verschlussteil (2) zum Verschwenken des Verschlussteils (2) aus der Schließstellung in Richtung hin zu dessen maximal geöffneter Stellung um die Verschlussteilschwenkachse (4) zu schwenken ist, **dadurch gekennzeichnet, dass** er zumindest eine gemeinsame Rückstellfeder (13) zum Zurückschwenken des Verschlussteils (2) in seine Schließstellung und des Sperrelementes (5) in seine Sperrstellung aufweist.

2. Karabinerhaken nach Anspruch 1, **dadurch gekennzeichnet, dass** das Sperrelement (5) eine Handhabe (8) zum Betätigen des Sperrelements (5) aufweist und die Handhabe (8) zum Verschwenken des Sperrelementes (5) aus der Sperrstellung in Richtung hin zur Freigabestellung in einer Richtung weg von der Verschlussteilschwenkachse (4) zu schieben oder zu schwenken ist.

3. Karabinerhaken nach Anspruch 1 oder 2, **dadurch gekennzeichnet, dass** das Verschlussteil (2) eine Ausnehmung (9) aufweist und die Handhabe (8), vorzugsweise das gesamte Sperrelement (5), innerhalb der Ausnehmung (9) angeordnet ist.

4. Karabinerhaken nach Anspruch 3, **dadurch gekennzeichnet, dass** die Handhabe (8), vorzugsweise das gesamte Sperrelement (5), in allen Stellungen des Sperrelementes (5) und/oder vollständig innerhalb der Ausnehmung (9) angeordnet ist.

5. Karabinerhaken nach einem der Ansprüche 1 bis 4, **dadurch gekennzeichnet, dass** die Rückstellfeder (13) einen ersten Schenkel (14) und zumindest einen zweiten Schenkel (15) aufweist, wobei der erste Schenkel (14) am Verschlussteil (2) anliegt und der zweite Schenkel (15) am Sperrelement (5) anliegt.

6. Karabinerhaken nach einem der Ansprüche 1 bis 5, **dadurch gekennzeichnet, dass** die Rückstellfeder (13), vorzugsweise im Bereich zwischen den Schenkeln (14, 15), an der Sperrelementschwenkachse (6) gelagert, vorzugsweise um die Sperrelementschwenkachse (6) herumgewickelt, ist.

7. Karabinerhaken nach einem der Ansprüche 1 bis 6, **dadurch gekennzeichnet, dass** das Sperrelement (5) eine Kontaktfläche (10) aufweist mit der es an einer Stützfläche (11) des Bügels (1) anliegt, wobei vorzugsweise vorgesehen ist, dass die Stützfläche (11) in einem Endbereich (12) des Bügels (1) angeordnet ist, und vorzugsweise die Verschlussteilschwenkachse (4) in demselben Endbereich (12) des Bügels (1) angeordnet ist.

8. Karabinerhaken nach Anspruch 7, **dadurch gekennzeichnet, dass** die Rückstellfeder (13) die Kontaktfläche (10) des Sperrelements (5) gegen die Stützfläche (11) des Bügels (1) bzw. an die Stützfläche (11) des Bügels (1) drückt.

9. Karabinerhaken nach einem der Ansprüche 7 oder 8, **dadurch gekennzeichnet, dass** das Sperrelement (5) beim Verschwenken um die Sperrelementschwenkachse (6) von der Sperrstellung in Richtung hin zur Freigabestellung bei zumindest einem Teil, vorzugsweise dem ersten Teil, der Verschwenkbewegung und/oder in die entgegengesetzte Richtung mit seiner Kontaktfläche (10), vorzugsweise schlupffrei, an der Stützfläche (11) des Bügels (1) abrollt.

10. Karabinerhaken nach Anspruch 9, **dadurch gekennzeichnet, dass** durch dieses Abrollen der Kontaktfläche (10) an der Stützfläche (11) bei Verschwenken des Sperrelements (5) von der Sperrstellung in Richtung hin zur Freigabestellung das Verschlussteil (2) zwangsweise aus Richtung seiner Schließstellung in Richtung hin zu seiner maximal geöffneten Stellung mitschwenkt und/oder bei Verschwenken des Sperrelements (5) von der Freigabestellung in Richtung hin zur Sperrstellung das Verschlussteil (2) zwangsweise von aus Richtung seiner maximal geöffneten Stellung in Richtung hin zu seiner Schließstellung mitschwenkt.

11. Karabinerhaken nach einem der Ansprüche 1 bis 10, **dadurch gekennzeichnet, dass** das Sperrelement (5) ausgehend von einer ersten Sperrstellung in verschiedenen Sperrstellungen in einem ersten Winkelbereich (26) eines Schwenkwinkels um die Sperrelementschwenkachse (6) diesseits eines Grenzwinkels (16) das Verschlussteil (2) in dessen Schließstellung gegen ein Verschwenken des Verschlussteils (2) in Richtung hin zu dessen maximal geöffneter Stellung sperrt.

12. Karabinerhaken nach Anspruch 11, **dadurch gekennzeichnet, dass** das Sperrelement (5) in einem zweiten Winkelbereich (27) jenseits des Grenzwinkels (16) bei einem Verschwenken des Verschlussteils (2) in Richtung hin zu seiner maximal geöffneten Stellung in Richtung hin zu einer maximalen Freigabestellung zwangsweise mitschwenkt.

13. Karabinerhaken nach Anspruch 11 oder 12, **dadurch gekennzeichnet, dass** der Grenzwinkel (16) kleiner oder gleich 10° beträgt, wobei der Grenzwinkel (16) zwischen einer ersten Verbindungsgeraden (22) zwischen der Sperrelementsschwenkachse (6) und einem Punkt (10a) der Kontaktfläche (10) des Sperrelements (5) mit dem größten Abstand (24) von der Sperrelementschwenkachse (6) und einer zweiten Verbindungsgeraden (23) zwischen der Sperrelementschwenkachse (6) und der Verschlussteilschwenkachse (4) zu messen ist.

14. Karabinerhaken nach einem der Ansprüche 7 bis 13, **dadurch gekennzeichnet, dass** die Stützfläche (11) des Bügels (1) eine stetig gekrümmte Oberfläche ist und/oder zwischen der Sperrelementschwenkachse (6) und der Verschlussteilschwenkachse (4) angeordnet ist.

## Claims

1. A karabiner hook having at least one clip (1) and at least one closure part (2) and at least one insertion opening (3) of the clip (1), which is closable by the closure part (2) in its closed position, wherein the closure part (2) is mounted on the clip (1) such that it is pivotable between the closed position and a maximally open position by means of a closure-part pivot pin (4) and at least one blocking element (5) is mounted on or in the closure part (2) such that it is pivotable by means of a blocking-element pivot pin (6), wherein the blocking element (5), in at least one blocking position, blocks the closure part (2) in its closed position to prevent pivoting of the closure part (2) in the direction towards its maximally open position and, in at least one release position, enables pivoting of the closure part (2) in the direction towards its maximally open position, wherein, for the pivoting out of the blocking position in the direction towards the release position, the blocking element (5) is to be pivoted in the same direction of rotation (7) about the blocking-element pivot pin (6) as the closure part (2) is to be pivoted about the closure-part pivot pin (4) for pivoting the closure part (2) out of the closed position in the direction towards its maximally open position, **characterised in that** it has at least one common restoring spring (13) for pivoting the closure part (2) back into its closed position and the blocking element (5) back into its blocking position.

2. The karabiner hook according to Claim 1, **characterised in that** the blocking element (5) has a handle (8) for actuating the blocking element (5) and, for pivoting the blocking element (5) out of the blocking position in the direction towards the release position, the handle (8) is to be pushed or pivoted in a direction away from the closure-part pivot pin (4).

3. The karabiner hook according to Claim 1 or 2, **characterised in that** the closure part (2) has a recess (9) and the handle (8), preferably the entire blocking element (5), is arranged within the recess (9) .

4. The karabiner hook according to Claim 3, **characterised in that** the handle (8), preferably the entire blocking element (5), is arranged within the recess (9) in all positions of the blocking element (5) and/or completely.

5. The karabiner hook according to one of Claims 1 to 4, **characterised in that** the restoring spring (13) has a first leg (14) and at least one second leg (15), wherein the first leg (14) abuts against the closure part (2) and the second leg (15) abuts against the blocking element (5).

6. The karabiner hook according to one of Claims 1 to 5, **characterised in that** the restoring spring (13), preferably in the region between the legs (14, 15), is mounted on the blocking-element pivot pin (6), preferably wound around the blocking-element pivot pin (6) .

7. The karabiner hook according to one of Claims 1 to 6, **characterised in that** the blocking element (5) has a contact face (10) with which it abuts against a supporting face (11) of the clip (1), wherein it is preferably provided that the supporting face (11) is arranged in an end region (12) of the clip (1) and the closure-part pivot pin (4) is preferably arranged in the same end region (12) of the clip (1).

8. The karabiner hook according to Claim 7, **characterised in that** the restoring spring (13) presses the contact face (10) of the blocking element (5) against the supporting face (11) of the clip (1) or presses against the supporting face (11) of the clip (1).

9. The karabiner hook according to one of Claims 7 or 8, **characterised in that**, the blocking element (5), when pivoting about the blocking-element pivot pin (6) from the blocking position in the direction towards the release position in at least part, preferably the first part, of the pivotal movement and/or in the opposite direction, rolls along the supporting face (11) of the clip (1) by means of its contact face (10), preferably in a non-slip manner.

10. The karabiner hook according to Claim 9, **characterised in that**, as a result of this rolling of the contact face (10) along the supporting face (11) during the pivoting of the blocking element (5) from the blocking position in the direction towards the release position, the closure part (2) inevitably also pivots from the direction of its closed position in the direction towards its maximally open position and/or, during a pivoting of the blocking element (5) from the release position in the direction towards the blocking position, the closure part (2) inevitably also pivots from the direction of its maximally open position in the direction towards its closed position.

11. The karabiner hook according to one of Claims 1 to 10, **characterised in that**, starting from a first blocking position, the blocking element (5), in various blocking positions in a first angular range (26) of a pivot angle about the blocking-element pivot pin (6) on this side of a limit angle (16), blocks the closure part (2) in its closed position to prevent pivoting of the closure part (2) in the direction towards its maximally open position.

12. The karabiner hook according to Claim 11, **characterised in that**, during a pivoting of the closure part (2) in the direction towards its maximally open position, the blocking element (5) inevitably also pivots in the direction towards a maximum release position in a second angular range (27) on the other side of the limit angle (16).

13. The karabiner hook according to Claim 11 or 12, **characterised in that** the limit angle (16) is smaller than or equal to 10°, wherein the limit angle (16) is to be measured between a first straight connecting line (22) between the blocking-element pivot pin (6) and a point (10a) of the contact face (10) of the blocking element (5) having the greatest distance (24) from the blocking-element pivot pin (6) and a second straight connecting line (23) between the blocking-element pivot pin (6) and the closure-part pivot pin (4) .

14. The karabiner hook according to one of Claims 7 to 13, **characterised in that** the supporting face (11) of the clip (1) is a continuously curved surface and/or is arranged between the blocking-element pivot pin (6) and the closure-part pivot pin (4).

## Revendications

1. Crochet mousqueton comportant au moins un arceau (1) et au moins une pièce de fermeture (2) ainsi qu'au moins une ouverture d'entrée (3) de l'arceau (1) qui peut être fermée par la pièce de fermeture (2) dans sa position de fermeture,
- la pièce de fermeture (2) étant montée par un axe de pivotement (4) de façon pivotante sur l'arceau (1) entre la position de fermeture et la position d'ouverture maximale et au moins un élément de verrouillage (5) monté pivotant par un axe de pivotement (6) sur ou dans la pièce de fermeture (2),
- l'élément de verrouillage (5) verrouillant la pièce de fermeture (2) au moins en position de verrouillage dans sa position de fermeture contre le basculement de la pièce de fermeture (2) en direction de sa position d'ouverture maximale et dans au moins une position de libération, il permet le basculement de la pièce de fermeture (2) en direction de sa position d'ouverture maximale,
- l'élément de verrouillage (5) pouvant basculer hors de sa position de verrouillage en direction de la position de libération, dans le même sens de rotation (7) autour de l'axe de pivotement (6) de l'élément de verrouillage, comme la pièce de fermeture (2) pour basculer la pièce de verrouillage (2) hors de la position de fermeture en direction de sa position d'ouverture maximale autour de l'axe de pivotement (4),
**caractérisé en ce qu'**il comporte
au moins un ressort de rappel commun (13) pour basculer en retour la pièce de fermeture (2) dans sa position de fermeture et l'élément de verrouillage (5) dans sa position de verrouillage.

2. Crochet mousqueton selon la revendication 1,
**caractérisé en ce que**
l'élément de verrouillage (5) comporte une prise (8) pour actionner l'élément de verrouillage (5) et coulisser ou pivoter la prise (8) pour pivoter l'élément de verrouillage (5) hors de la position de verrouillage en direction de la position de libération, dans la direction s'éloignant de l'axe de pivotement (4).

3. Crochet mousqueton selon la revendication 1 ou 2,
**caractérisé en ce que**
la pièce de fermeture (2) comporte un évidement (9) et la prise (8), de préférence l'ensemble de l'élément de verrouillage (5), est logé dans l'évidement (9).

4. Crochet mousqueton selon la revendication 3,
**caractérisé en ce que**
la prise (8), de préférence l'ensemble de l'élément de verrouillage (5), est logé dans toutes les positions de l'élément de verrouillage (5) et/ou complètement dans l'évidement (9).

5. Crochet mousqueton selon l'une des revendications 1 à 4,
**caractérisé en ce que**
le ressort de rappel (13) a une première branche (14) et au moins une seconde branche (15), la première branche (14) s'appliquant contre la pièce de fermeture (2) et la seconde branche (15) contre l'élément de verrouillage (5).

6. Crochet mousqueton selon l'une des revendications 1 à 5,
**caractérisé en ce que**
le ressort de rappel (13) est monté de préférence dans la zone comprise entre les branches (14, 15) sur l'axe de pivotement (6) de l'élément de verrouillage de préférence en étant enroulé autour de l'axe de pivotement (6) de l'élément de verrouillage.

7. Crochet mousqueton selon l'une des revendications 1 à 6,
**caractérisé en ce que**
l'élément de verrouillage (5) a une surface de contact (10) par laquelle elle s'appuie contre une surface d'appui (11) de l'arceau (1) et il est de préférence prévu que la surface d'appui (11) se trouve dans une zone d'extrémité (12) de l'arceau (1) et de préférence l'axe de pivotement (4) de l'élément de verrouillage est dans la même zone d'extrémité (12) de l'arceau (1).

8. Crochet mousqueton selon la revendication 7,
**caractérisé en ce que**
le ressort de rappel (13) pousse la surface de contact (10) de l'élément de verrouillage (5) contre la surface d'appui (11) de l'arceau (1) ou sur la surface d'appui de l'arceau (1).

9. Crochet mousqueton selon la revendication 7 ou 8,
**caractérisé en ce que**
l'élément de verrouillage (5) pivotant autour de l'axe de pivotement (6) roule de la position de verrouillage en direction de la position de libération sur au moins une partie, de préférence la première partie, du mouvement de pivotement et/ou dans la direction opposée avec sa surface de contact (10) de préférence sans glissement, sur la surface d'appui (11) de l'arceau (1).

10. Crochet mousqueton selon la revendication 9,
**caractérisé en ce que**
le roulement de la surface de contact (10) sur la surface d'appui (11) lors du pivotement de l'élément de verrouillage (5) de la position de verrouillage vers la position de libération, entraîne en pivotement la pièce de fermeture (2) de force en direction de sa position de fermeture vers sa position d'ouverture maximale et/ou pour le pivotement de l'élément de verrouillage (5) de sa position de libération en direction de sa position de verrouillage, la pièce de fermeture (2) nécessairement est entraînée en pivotement de force de la direction de sa position d'ouverture maximale vers sa position de fermeture.

11. Crochet mousqueton selon l'une des revendications 1 à 10,
**caractérisé en ce que**
partant d'une première position de blocage l'élément de blocage (5) bloque dans différentes positions de blocage, dans une première plage angulaire (26) d'un angle de pivotement autour de l'axe de pivotement (6) de l'élément de blocage, de ce côté un angle limite (16) la pièce de fermeture (2) dans sa position de fermeture contre le pivotement de la pièce de fermeture (2) en direction de sa position d'ouverture maximale.

12. Crochet mousqueton selon la revendication 11,
**caractérisé en ce que**
dans une seconde plage angulaire (27) de l'autre côté de l'angle limite (16), pour un pivotement de la pièce de fermeture (2) en direction de sa position maximale d'ouverture l'élément de blocage (5) participe de force au pivotement.

13. Crochet mousqueton selon l'une des revendications 11 ou 12,
**caractérisé en ce que**
l'angle limite (16) est inférieur ou égal à 10°,
l'angle limite (16) est mesuré entre une première droite de liaison (22) entre l'axe de pivotement (6) de l'élément de verrouillage et un point (10a) de la surface de contact (10) de l'élément de verrouillage (5) avec la plus grande distance (24) entre l'axe de pivotement (6) de l'élément de verrouillage et une seconde droite de liaison (23) entre l'axe de pivotement (6) de l'élément de verrouillage et l'axe de pivotement (4) de la pièce de fermeture.

14. Crochet mousqueton selon l'une des revendications 7 à 13,
**caractérisé en ce que**
la surface d'appui (11) de l'arceau (1) a une surface à cintrage continu et/ou est prévue entre l'axe de l'élément de blocage (6) et l'axe de pivotement (4) de la pièce de fermeture.
